# EUROPÄISCHE PATENTSCHRIFT

(11) **EP 3 457 708 B1**
(45) Veröffentlichungstag und Bekanntmachung des Hinweises auf die Patenterteilung: **06.01.2021**
(21) Anmeldenummer: 18000733.8
(22) Anmeldetag: 14.09.2018
(51) Int. Cl.: H04Q 1/02

(54) **ANORDNUNG VON VERTEILERMODULEN**
ARRANGEMENT OF DISTRIBUTOR MODULES
AGENCEMENT DE MODULES DE DISTRIBUTION

(30) Priorität: 14.09.2017 DE 202017105561 U
(43) Veröffentlichungstag der Anmeldung: 20.03.2019
(73) Patentinhaber: trans data elektronik Gmbh, 49626 Bippen (DE)
(72) Erfinder: Engel, André, 49626 Bippen/Orthe (DE)
(74) Vertreter: Fitzner, Uwe

(56) Entgegenhaltungen:
- WO-A1-2009/098293
- US-A1- 2015 056 843

## Beschreibung

Die vorliegende Erfindung betrifft die Anordnung von Verteilermodulen zur Verbindung analog oder digital beschalteter Anschlussbuchsen mit weiteren Verteilermodulen, weiterführenden Leitungen oder Endgeräten auf einer Trägervorrichtung.

Aus der DE 295 101 85 U1 sind Verteilerfelder, insbesondere für Datenleitungen bekannt, mit welchen durch eine gute Abschirmung hohe Übertragungsraten erzielt werden sollen.

Aus der DE 20 2008 001 740 sind Verteilermodule und modulare Verteilerfelder bekannt, wobei die Verteilermodule ein allseits geschlossenes abgeschirmtes Gehäuse mit mehreren Anschlussbuchsen an einer Frontseite und auf der der Frontseite gegenüberliegenden Rückseite einen Steckverbinder aufweisen.

Das Dokument DE 102004043763 offenbart zusätzlich ein derartiges Verteilungsmodul.

Die US 2015/056843 A1 offenbart ebenfalls Anordnungen von Verteilermodulen.

Aus der europäischen Anmeldung PCT/EP2009/051382 ist ein Verteilermodul zur Verwendung in modularen Verteilerfeldern zur Verbindung analoger oder digital geschalteter Anschlussbuchsen mit weiteren Verteilerfeldern oder weiterführenden Leitungen oder Endgeräten bekannt.

In modernen Rechenzentren benutzt man heute für die passive Netzwerkinfrastruktur zunehmend modulare Plug & Play-Verkabelungssysteme. Der Vorteil besteht darin, dass man schnell Änderungen bzw. Erweiterungen an der Netzwerkverkabelung vornehmen kann. Die aktive Hardware, wie Server oder Switche besitzt im Regelfall einen Lebenszyklus von 3-4 Jahren. Jeder Hardwarewechsel ist mit neuen Anforderungen hinsichtlich der benötigten Netzwerkverkabelung verbunden. Hierbei spielen beispielsweise unterschiedliche Portzahlen, Anschlusstechnologien und Übertragungsraten eine Rolle. Zudem muss aufgrund der immer größer werdenden Leistungsdichten der aktiven Hardwareseite auch auf der passiven Seite gleichgezogen werden. Die Hardwarebestandteile sind vielfach nur mit Aufwand zugänglich. Die Systeme sind daher nicht ausreichend wartungsfreundlich.

Aufgabe der vorliegenden Erfindung ist daher, modular aufgebaute Verteilerfelder wartungsfreundlich zu gestalten. Gegenstand der Erfindung ist demgemäß die Anordnung von Verteilermodulen zur Verbindung analog oder digital geschalteter Anschlussbuchsen mit weiteren Verteilermodulen oder weiterführenden Leitungen oder Endgeräten.

Die Aufgabe wird dadurch gelöst, dass wenigstens ein plattenförmig ausgestalteter Modulträger ein oder mehrere darauf angeordnete Verteilermodule aufweist und der(die) Modulträger nicht stationär ausgestaltet ist (sind).

Erfindungsgemäß ist der Modulträger ein plattenförmiges Element, welches quadratisch oder auch rechteckig ausgestaltet sein kann. An einer, zwei, drei oder vier Seiten dieses plattenförmigen Elementes können Erhöhungen vorgesehen sein. Vorzugsweise handelt es sich um wandförmige Ausgestaltungen. Hierbei können geschlossene Wände oder auch solche Wände in Betracht kommen, welche partiell durchbrochen sind bzw. nur partielle Wandabschnitte darstellen.

Die Erhöhungen können auch beliebige andere Ausgestaltungen haben. Es kann sich um senkrecht stehende drahtförmige oder pöllerförmige Gebilde handeln. Ebenso können gitterförmige Ausgestaltungen verwendet werden. In Betracht kommen abschnittsweise angeordnete Gitter oder rundherum angebrachte Gitter, welche wie Zäune ausgestaltet sind.

Der Modulträger kann in beliebiger Weise in einer Trägervorrichtung angeordnet sein. Hierbei kann der Modulträger aus dieser Trägervorrichtung entnehmbar sein. Ebenso sind andere beliebige bewegliche Anordnungen denkbar. Besonders bevorzugt sind schiebebewegliche Modulträger. Als Trägervorrichtung werden vorzugsweise Befestigungsohren verwendet.

In dem Fall der schiebebeweglichen Anordnung hat der Modulträger die Ausführungsform eines schubladenförmigen Elementes. Hierbei kann es sich allein um das plattenförmige Element oder um die Gestaltung einer Schublade mit partiell oder geschlossen angelegten Seitenwänden handeln. Im Bedarfsfalle ist dieser Modulträger auch arretierbar, so dass er gegen ein versehentliches Herausziehen geschützt ist.

Der Modulträger besitzt rückseitig Verriegelungsmechanismen zur Fixierung der auf ihn angeordneten Verteilermodule. Vorzugsweise ist der Modulträger bei Vollbestückung mit acht Verteilermodulen bis zu 96 LC DUPLEX-Anschlüsse mit insgesamt 192 Fasern bestückt. Der Modulträger besitzt besonders bevorzugt bei Vollbestückung mit acht Verteilermodulen insgesamt 96 MPO 24 F-Anschlüsse mit insgesamt 2.304 Fasern. In einer Variante der Erfindung besitzt der Modulträger eine frontseitige Abdeckung zum Schutz der dahinter liegenden Anschlüsse, die lediglich eingehängt werden muss. In einer weiteren Variante der Erfindung besitzt der Modulträger eine frontseitige Abdeckung, die auch gleichzeitig zur horizontalen Patchkabelführung dient. Der Modulträger kann ferner eine frontseitige Abdeckung besitzen, die auch gleichzeitig einen Beschriftungsstreifen aufnehmen kann. Schließlich kann die Abdeckung bei eingeschobener und verriegelter Schublade ebenfalls verriegelt sein und nicht einfach ausgehängt werden.

Vorzugsweise an der Frontseite der gegenüberliegenden Rückseite des Modulträgers sind bevorzugt Erdungskontaktierungen vorhanden, welche vorzugsweise als elastische Elemente, z. B. als Federn ausgestaltet sind.

Die Erdungskontaktierung der Module kann rückseitig durch Federn erfolgen. Die Federn können gleichzeitig auch der Verriegelung dienen. In einer bevorzugten Variante sind rückseitig für jedes Modul zwei Federn vorgesehen. Die eine Feder dient hierbei der Verriegelung, und die zweite Feder klemmt bzw. führt auch das Modul seitlich und schafft vorzugsweise seitlich eine Erdungskontaktierung.

Die erfindungsgemäßen Modulträger bilden mit den darauf angeordneten Verteilermodulen die Verteilerfelder. Ein modulares Verteilerfeld hat vorzugsweise Abmessungen von 19//1HE. Ein solches Verteilerfeld kann acht Verteilermodule aufnehmen. Die Befestigung der einzelnen Module erfolgt vorzugsweise ohne Zuhilfenahme von Werkzeugen. Hierfür eignen sich beliebige Verriegelungsmechanismen. Es kann sich z. B. um Riegel-Schnapp-Verschlüsse, Federn, Rastelelemente oder Verriegelungsbolzen mit Federn handeln. Der betreffende Befestigungsmechanismus ist vorzugsweise auf dem Boden des plattenförmigen Modulträgers angeordnet.

Unter Verteilermodul (im Folgenden auch als Modul bezeichnet) wird ein allseits geschlossenes Element mit einer Anschlussbuchse an einer Frontseite und der Möglichkeit einer Verkabelung an der der Frontseite gegenüberliegenden Rückseite verstanden. Es handelt sich um ein Element, welches mehrere Anschlussbuchsen an einer Frontseite aufweist und eine gemeinsamen Verkabelung aller Anschlussbuchsen des Verteilermoduls an der der Frontseite entgegengesetzten Rückseite erlaubt. Durch die Verwendung eines solchen allseits geschlossenen Gehäuses können Vorteile erzielt werden. Alternativ kann ein Verteilermodul auch mehrere Anschlussbuchsen ohne eigenes allseits geschlossenes Gehäuse für jede einzelne Anschlussbuchse aufweisen, wobei ein allseits geschlossenes Gehäuse um diese mehrere Anschlussbuchsen des Verteilermoduls vorhanden ist.

Gemäß einer Ausführungsform werden Verteilermodule mit einem allseits geschlossenen Gehäuse und jeweils einer Anschlussbuchse, vorzugsweise einer RJ-45 Anschlussbuchse, eingesetzt. Jedes dieser Module ist durch das allseits geschlossene Gehäuse sehr gut abgeschirmt, was hohe Datenvolumina und Übertragungsgeschwindigkeiten ermöglicht, wie sie in modernen Netzwerken heute verlangt werden. Bei dieser Ausführungsform sind vorzugsweise mindestens sechs der Verteilermodule rückseitig derartig zueinander angeordnet, dass ein Kabel der erforderlichen Anzahl an Aderpaaren (bei 6 RJ-45 Buchsen sind dies 24 Aderpaare) mit einer äußeren Hülle zur direkten Verdrahtung der vorzugsweise mindestens sechs RJ-45 Buchsen verwendet wird. Die rückseitige Anordnung zueinander muss dabei lediglich sicherstellen, dass mit nur einem Kabel eine Verdrahtung mit den Anschlussbuchsen mehrerer Module möglich ist. Von diesem Erfordernis abgesehen, kann die relative Anordnung der Module beliebig erfolgen und an bauliche oder andere Anforderungen flexibel angepasst werden.

Gemäß einer weiteren Ausführungsform können mehrere solcher Module zusammen beispielsweise in einem eigenen allseits geschlossenen Gehäuse untergebracht werden, was die Abschirmung und damit die anwendungstechnischen Eigenschaften weiter verbessert. Module gemäß dieser Ausführungsform unterscheiden sich rein äußerlich nicht von den erfindungsgemäßen Verteilermodulen gemäß der nachstehend beschriebenen weiteren bevorzugten Ausführungsform.

Gemäß einer weiteren Ausführungsform weist das Verteilermodul an der Frontseite mehrere Anschlussbuchsen (vorzugsweise RJ45 Buchsen) auf. Bevorzugt weisen die Module bei dieser Ausführungsform mindestens 6 RJ-45 Buchsen in einer Reihe auf. Dabei können die Module bei einer Einbauhöhe von 1 HE ein- oder zweireihig gestaltet sein. Weiterhin ist es aufgrund der flachen Bauweise gemäß einer bevorzugten Ausführungsform der Verteilermodule auch möglich zwei Verteilermodule bei einer Gesamt-Einbauhöhe von 1 HE übereinander anzuordnen. Dabei können zwei gleiche Module eingesetzt werden oder aber zwei unterschiedliche Module mit unterschiedlichen Anschlusstechniken übereinander angeordnet werden ohne dass die Gesamthöhe von 1 HE überschritten wird.

Grundsätzlich sind auch Verteilermodule mit einer Einbauhöhe von mehr als 1 HE möglich, was insbesondere bei der Gestaltung von Verteilermodulen mit internen Konvertern zum Übergang zwischen verschiedenartigen Verbindungsmöglichkeiten an Front- und Rückseite der Verteilermodule von Vorteil sein kann.

Für eine vollständige digitale Beschaltung von RJ-45-Anschlussbuchsen werden 8 Anschlussadern benötigt. Bei einem Modul mit 6 RJ-45-Anschlussbuchsen muss daher zur vollständigen digitalen Beschaltung das zur Verdrahtung verwendete Kabel mindestens 24 Aderpaare aufweisen.

Die Modulträger weisen vorzugsweise ein oder mehrere Verteilermodule auf. Dabei können auch gemischte Verteilermodule zur Anwendung kommen. Die einzelnen Module bieten Verbindungsmöglichkeiten über optische Lichtwellenleiter neben den Verbindungsmöglichkeiten der RJ-45-Anschlussbuchsen. Durch die innerhalb des Gehäuses des Verteilermoduls vorhandene Verbindung der frontseitigen Anschlussbuchsen mit der rückseitigen Direktverdrahtung per Kabel und der Ausführung des Verteilermoduls mit einem allseits geschlossenen Gehäuse ist diese gemischte Anordnung verschiedener Verteilermodule problemlos möglich. Die Anordnung der unterschiedlichen Verteilermodule auf dem Modulträger kann dabei nebeneinander oder aber, ohne die Einbauhöhe 1 HE zu überschreiten, auch übereinander erfolgen.

Eine weitere Möglichkeit ist der Einsatz sogenannter Konvertermodule, die frontseitig eine Gestaltung mit RJ-45 Anschlussmöglichkeit und eine Anschlussmöglichkeit für Lichtwellenleiterkabel an der Rückseite des Moduls aufweisen. Bei dieser Ausführungsform enthält das Modul im Inneren des allseits geschlossenen Gehäuses die erforderlichen aktiven Komponenten zur Realisierung dieser Anschlussmöglichkeit.

Die Verteilermodule können zur Verbindung mehrerer Verteileranlagen, zum Anschluss weiterführender Leitungen oder aber zum Anschluss von Endgeräten dienen. Besonders eignen sie sich zur einfachen Herstellung von festen oder mobilen Gebäudeverkabelungen, da die Zahl der einzubringenden Kabel und der im Verteilerfeld aufzulegenden Kabel minimiert ist.

Als besonderer technisch relevanter Vorteil ist hervorzuheben, dass mit den Verteilermodulen bei einer Einbauhöhe von 1 HE und einer Einbaubreite von 19" aufgrund der guten Abschirmung 48 voll beschaltete RJ45-Verbindungen mit einer Performance gemäß Cat5 e bzw. Cat6_{A} oder besser möglich sind.

Statt RJ-45 Buchsen können die erfindungsgemäßen Verteilermodule auch jede Art von anderen Anschlussbuchsen aufweisen, wenn dies vorteilhaft ist. Die Vorteile der Module kommen immer dann zum Tragen, wenn eine herkömmliche 1:1-Verkabelung mit einer Vielzahl von Kabeln zu Gewichts- Platz und Performanceproblemen führen kann. Derzeit sind für Netzwerkverkabelungen mit metallhaltigen Kabeln RJ-45 Buchsen am gebräuchlichsten; prinzipiell kann jedoch jede beliebige Art von Anschlussbuchse verwendet werden. Proprietäre Lösungen mit speziellen Anschlussbuchsen sind ebenfalls denkbar.

Bei Verkabelungslösungen mit Lichtwellenleitern sind die Gewichtseinsparungen und die Reduzierung der Brandlast nicht so ausgeprägt wie bei metallhaltigen Leitern, doch sind auch solche Verteilermodule ohne weiteres möglich.

Um den mit den Verteilermodulen erreichten hohen Abschirmungsgrad auch bei der weiterführenden Verkabelung aufrecht zu erhalten, ist es vorteilhaft, auch für diese weiterführende Verkabelung hochwertig abgeschirmte Kabel zu verwenden.

Vorzugsweise werden zum Anschluss der Verteilermodule mit vorzugsweise mindestens 6 Anschlussbuchsen (vorzugsweise RJ-45 Anschlussbuchsen) Verbindungskabel verwendet, die mindestens 24 Aderpaare und nur eine äußere Hülle aufweisen und darüber hinaus einen hohen Abschirmungsgrad.

Die erfindungsgemäßen Verteilermodule werden auf der Vorderseite beidseitig mit Stiftschrauben nachgerüstet, um eine Positionierung auf dem Modulträger, vorzugsweise der Frontplatte des Modulträgers zu erreichen. Die Module lassen sich in der oberen Reihe schwebend bestücken, da diese auf der Rückseite auf den Federn der unteren Modulreihe aufliegen und vorne die Stiftschrauben der einzelnen Module in den davor vorgesehenen Bohrungen der Frontplatte aufliegen.

Vorzugsweise wird der schubladenförmig ausgestaltete Modulträger in den 19"Befestigungsohren geführt und verriegelt. Dabei sind die Führungsschienen an dem schubladenförmigen Modulträger links und rechts befestigt. Die Führungsschienen stehen im Bereich der Frontplatte etwas vor, da die Führungsschienen gleichzeitig eine Federwirkung besitzen, vorzugsweise gleichzeitig eine Federwirkung besitzen und links und rechts in den 19"Befestigungsohren verriegeln.

Der erfindungsgemäße Modulträger kann voll bestückt bis zu 96 LWL LC Duplex Ports (192 Fasern) oder 96 x MPO 12F (insgesamt 1152 Fasern) oder auch 96 MPO 24F (insgesamt 2304 Fasern) auf einer Höheneinheit aufnehmen. Unter einer Höheneinheit (1 HE entspricht 1 ¾ Zoll, also 44,45 mm) wird jeweils eine Reihe der übereinander liegenden Verteilermodule verstanden.

Erfindungsgemäß sind auch Bestückungen mit MPO 16 Fasern, MPO 32 Fasern, MPO 72 Fasern oder MPO 96 Fasern denkbar. Die mögliche Gesamtfaserzahl erhöht sich dann entsprechend mit dem Faktor 96. Mit höherfaserigen MPO-Anschlüssen, die es bereits am Markt gibt, ist eine entsprechend höhere Faserzahl möglich.

Innerhalb des erfindungsgemäßen Modulträgers können unterschiedliche Verteilermodule in Kombination miteinander angeordnet werden. Z. B. können innerhalb eines Modulträgers unterschiedliche Module mit LWL Ports und Cu Ports z. B. RJ-45 kombiniert werden. Der Modulträger kann mit einer frontseitigen Abdeckung zur besseren horizontalen Patchkabelführung und zum Schutz der Ports bestückt werden. Die Abdeckung wird bei geöffneter Schublade eingehängt. Die Verriegelung erfolgt gleichzeitig mit der Verriegelung der Schublade.

Überraschend können mit der erfindungsgemäßen Lösung die hohen Portdichten bewältigt werden.

Die Erfindung wird nachstehend anhand der beigefügten Abbildungen näher erläutert. Dabei zeigen:
- Fig. 1 -: Modulträger komplett mit Abdeckung eingebaut in der 19"Ebene.
- Fig. 2 -: eingehängte Abdeckung, vorstehende Schiebe als Federverrieglung
- Fig. 3 -: vorstehende Schiene, verriegelt mit 19"Befestigungsohr
- Fig. 4 -: Federn für rückseitige Modulbefestigung mit gleichzeitiger Erdkontaktierung
- Fig. 5 -: die Frontansicht eines erfindungsgemäßen Verteilermoduls
- Fig. 6 -: die Rückansicht eines erfindungsgemäßen Verteilermoduls
- Fig. 7 -: einen Modulträger mit 8 erfindungsgemäßen Verteilermodulen von der Vorderseite betrachtet

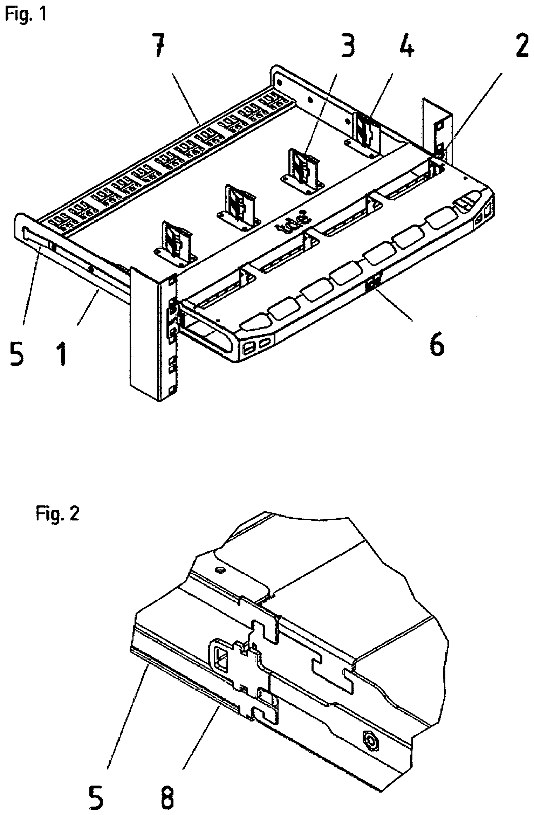

In Fig. 1 ist der komplette erfindungsgemäße Modulträger 1 abgebildet. Er zeigt den Träger mit Abdeckung, eingebaut in der 19"Ebene. Der Modulträger 1 ist in einer Trägervorrichtung 2 angeordnet. Auf dem plattenförmigen Boden des Modulträgers 1 befinden sich die Federelemente 3. Seitlich sind die Wände 4 erkennbar. Diese weisen die Schienen für die schiebebewegliche schubladenförmige Ausgestaltung des Modulträgers auf. Mit Ziffer 6 ist die Rückseite des Modulträgers dargestellt, während Ziffer 7 die Vorderseite zeigt.

Die Ziffer 2 kennzeichnet eine 19" Rasterschiene des Racks. Diese Rasterschiene ist nicht Bestandteil des erfindungsgemäßen Modulträgers. Etwas höher mittig ist ein 19"Befestigungsohr zu erkennen.

In Fig. 2 ist der Einhängmechanismus 8 der Abdeckung zu sehen. Erkennbar ist auch die Abdeckung 5. Außerdem ist in der Mitte die Schiene mit Verriegelung zu erkennen.

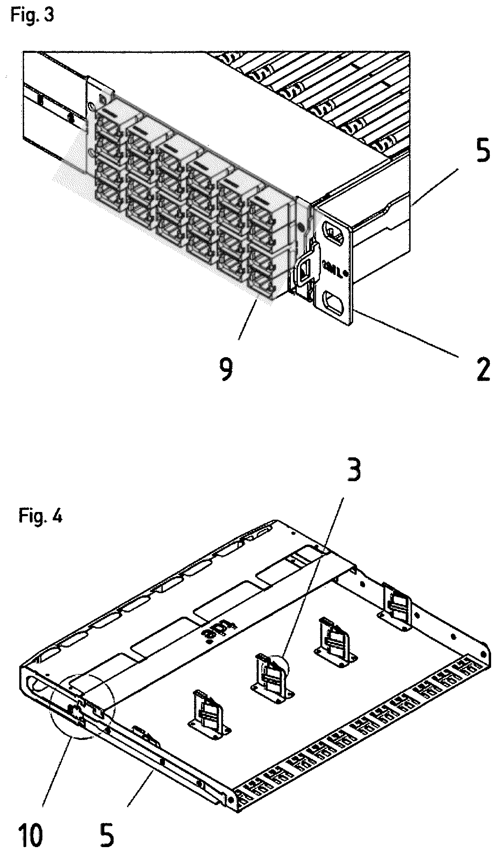

In Fig. 3 sind die Anschlüsse für die Verteilermodule und die Verkabelungsanschlüsse 9 erkennbar. Der Modulträger 1 mit den einzelnen Modulen ist in der Trägervorrichtung (Befestigungsohren) 2 und in der Schiene 5 beweglich angeordnet.

In Fig. 4 sind die Federn 3 in dem Detail erkennbar. Diese sind gleichzeitig für die Erdungskontaktierung ausgelegt. Die seitlichen Führungsschienen 5 sind als Verriegelungsfelder 10 ausgelegt. Die Führungsschienen weisen Federn auf. Es entstehen somit Federschienen, die in den dazugehörigen 19"Befestigungsohren verriegeln.

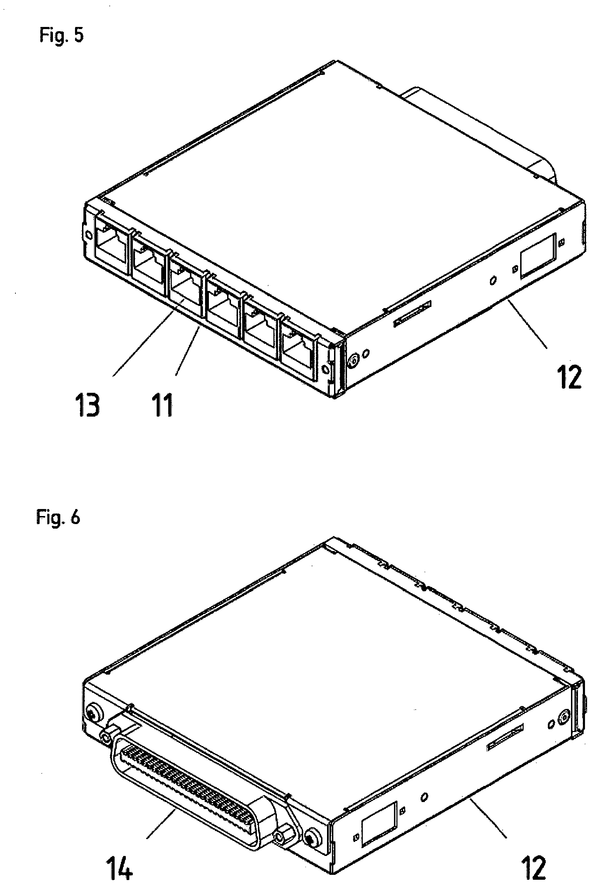

In Fig. 5 ist ein erfindungsgemäßes Verteilermodul 11 in Frontansicht dargestellt, wobei das allseits geschlossene Anschlussgehäuse 12 und die vorderseitigen RJ-45 Anschlussbuchsen 13 dargestellt sind.

Fig. 6 zeigt ein erfindungsgemäßes Verteilermodul 11 mit allseits geschlossenem Gehäuse 12 von der Rückseite, wodurch die Direktverdrahtung von 6 Buchsen mit einem Kabel mit einer äußeren Hülle erkennbar ist.

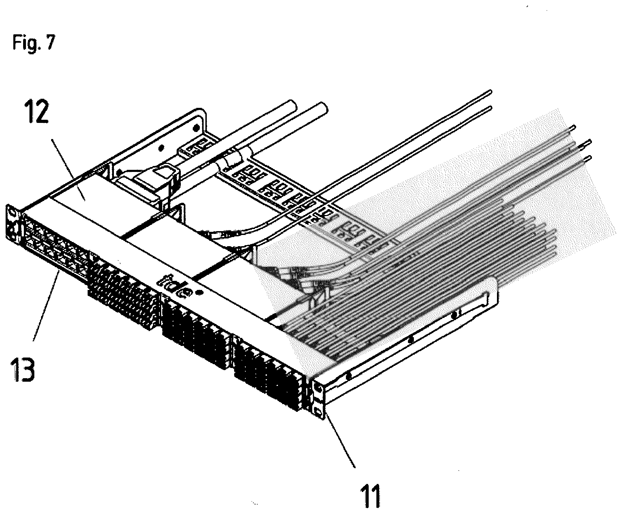

Fig. 7 zeigt einen Modulträger mit 8 Verteilermodulen 11 mit allseits geschlossenem Gehäuse 12, wobei die Verteilermodule zweireihig übereinander angeordnet sind und unterschiedliche Anschlussbuchsen 13 an der Vorderseite aufweisen. Die gezeigte Bestückung von links nach rechts gesehen sieht wie folgt aus: 2 Verteilermodule mit jeweils 6 RJ45 Buchsen, 2 Verteilermodule mit jeweils 12 LC Duplex, 2 Verteilermodule mit jeweils 12 MPO 12 Faser und 2 Verteilermodule mit jeweils 12 MPO 24 Fasern.

Die Erfindung ist vorstehend anhand einiger Ausführungsformen beschrieben; sie ist aber nicht auf diese Ausführungsformen beschränkt.

## Patentansprüche

1. Anordnung von modularen Verteilermodulen (11) zur Verbindung analog oder digital geschalteter Anschlussbuchsen mit weiteren Verteilermodulen oder weiterführenden Leitungen oder Endgeräten, wobei wenigstens ein plattenförmig ausgestalteter Modulträger (1) ein oder mehrere darauf angeordnete Verteilermodule aufweist und der(die) Modulträger nicht stationär ausgestaltet ist (sind),
- worin der Modulträger (1) federförmige Elemente (3) zur Erdungskontaktierung aufweist
und
- worin der Modulträger (1) Verriegelungsmechanismen (3) zur Aufnahme der Verteilermodule (11) aufweist.

2. Anordnung nach Anspruch 1, **dadurch gekennzeichnet, dass** der Modulträger (1) quadratisch oder rechteckig ausgestaltet ist.

3. Anordnung nach einem der Ansprüche 1 oder 2, **dadurch gekennzeichnet, dass** der Modulträger (1) an ein, zwei, drei oder vier Seiten Erhöhungen (4) aufweist.

4. Anordnung nach einem der Ansprüche 1 - 3, **dadurch gekennzeichnet, dass** die Erhöhung (4) wandförmig ausgestaltet ist.

5. Anordnung nach einem der vorhergehenden Ansprüche, **dadurch gekennzeichnet, dass** die Erhöhung (4) partielle Wandabschnitte und/oder stabförmige Elemente aufweist und/oder gitterförmig ausgestaltet ist.

6. Anordnung nach einem der Ansprüche 1 - 5, **dadurch gekennzeichnet, dass** der Modulträger (1) schiebebeweglich oder feststellbar ist.

7. Anordnung nach einem der Ansprüche 1 - 6, **dadurch gekennzeichnet, dass** der Modulträger (1) bis zu 8 Verteilermodule (11) aufnehmen kann.

8. Anordnung nach einem der vorhergehenden Ansprüche, **dadurch gekennzeichnet, dass** der Modulträger (1) die Verriegelungsmechanismen (3) zur Fixierung der Verteilermodule (11) rückseitig besetzt.

9. Anordnung nach einem der vorhergehenden Ansprüche, **dadurch gekennzeichnet, dass** der Modulträger (1) bei Vollbestückung mit 8 Verteilermodulen (11) bis zu 96 LC DUPLEX-Anschlüsse mit insgesamt 192 Fasern besitzt.

10. Anordnung nach einem der vorhergehenden Ansprüche, **dadurch gekennzeichnet, dass** der Modulträger (1) bei Vollbestückung mit 8 Verteilermodulen (11) insgesamt bis zu 96 MPO 24F-Anschlüsse mit insgesamt 2.304 Fasern besitzt.

11. Anordnung nach einem der vorhergehenden Ansprüche, **dadurch gekennzeichnet, dass** der Modulträger (1) eine frontseitige Abdeckung (5) zum Schutz der dahinter liegenden Anschlüsse besitzt, die lediglich eingehängt werden muss.

12. Anordnung nach einem der vorhergehenden Ansprüche, **dadurch gekennzeichnet, dass** der Modulträger (1) eine frontseitige Abdeckung (5) besitzt, die gleichzeitig zur horizontalen Patchkabelführung dient.

13. Anordnung nach einem der vorhergehenden Ansprüche, **dadurch gekennzeichnet, dass** der Modulträger (1) eine frontseitige Abdeckung (5) besitzt, die gleichzeitig einen Beschriftungsstreifen aufnehmen kann.

14. Anordnung nach einem der Ansprüche 11 bis 13, **dadurch gekennzeichnet, dass** die Abdeckung (5) bei eingeschobener und verriegelter Schublade ebenfalls verriegelt ist und nicht ausgehängt werden kann.

## Claims

1. Arrangement of modular distribution modules (11) for connecting analogously or digitally switched connection sockets with oher distribution modules or continuing lines or terminal devices, where at least one plate-shaped module carrier (1), has one or more distribution modules, which are arranged therupon and the module carrier (s) is (are) not designed in a stationary manner,
- the module carrier (1) having spring-like elements (3) for earthing contact
and
- the module carrier (1) having locking mechanisms (3) for the reception of distribution modules (11).

2. Arrangement according to claim 1, **characterised in that** the module carrier (1) is arranged in a square or rectangular manner.

3. Arrangement according to any one of claims 1 or 2, **characterised in that** the module carrier (1) has elevations (4) at one, two, three or four sides.

4. Arrangement according to any one of claims 1 - 3, **characterised in that** the elevation (4) is arranged in a wall-like manner.

5. Arrangement according to any one of the preceding claims, charaterised in that the elevation (4) has partial wall sections and/or rod-shaped elements and/or is arranged in a grid-like manner.

6. Arrangement according to any one of claims 1 - 5, **characterised in that** the module carrier (1) is slidable or lockable.

7. Arrangement according to any one of claims 1 - 6, **characterised in that** the module carrier (1) can hold up to 8 distribution modules (11).

8. Arrangement according to any one of the preceding claims, **characterised in that** the locking mechanisms (3) for fixing the distribution modules (11) are arranged by the modular carrier (1) on the rear side.

9. Arrangement according to any one of the preceding claims, **characterised in that** the module carrier (1), when fully loaded with 8 distribution modules (11), comprises up to 96 LC DUPLEX-sockets with all in all 192 fibers.

10. Arrangement according to any one of the preceding claims, **characterised in that** the module carrier (1), when fully loadad with 8 distribution modules (11), comprises all in all up to 96 MPO 24F-sockets with all in all 2.304 fibers.

11. Arrangement according to any one of the preceding claims, **characterised in that** the module carrier (1) has a front cover (5) which only has to be hooked in, for the protection of the sockets arranged there behind.

12. Arrangement according to any one of the preceding claims, **characterised in that** the module carrier (1) has a front cover (5), which at the same time is used for horizontal patch cable routing.

13. Arrangement according to any one of the preceding claims, **characterised in that** the module carrier (1) has a front cover (5), which at the same time can hold a labeling strip.

14. Arrangement according to any one of claims 11 to 13, **characterised in that**, by inserted and locked drawer, the front cover (5) is locked as well and cannot be unhooked.

## Revendications

1. Arrangement de modules de distribution modulaires (11) pour la connection des douilles de connexion qui sont couplées dans une manière analogue ou digitale avec d'autres modules de distribution ou des câbles continuants ou des appareils terminaux, où au moins un support de module en forme de plaque (1) a une ou plusieures modules de distribution , que sont arrangés au dessus et le(s) support(s) de module est (sont) pas formé(s) dans une manière stationnaires,
- le support de module (1) ayant des éléments plumeux (3) pour le contact ave la terre et
- le support de module (1) ayant des mécanismes de verouillage (3) pour la réception des modules de distribution (11).

2. Arrangement selon la revendication 1, **caractérisée en ce que** le support de module (1) est arrangé dans une manière en forme de carré ou rectangulaire.

3. Arrangement selon l'une quelconque des revendicatious 1 or 2, **caractérisé en ce que** le support de module (1) a des élévations (4) sur un, deux, trois, ou quatre côtés.

4. Arrangement selon l'une quelconque des revendications 1 - 3, **caractérisé en ce que** l'élévation (4) est désignée comme mur.

5. Arrangement selon l'une quelconque des revendications précédentes, **caractérisé en ce que** l'élévation (4) a des sections de mur partielles et/ou des éléments en forme de tiges et/ou est arrangée en forme de grille.

6. Arrangement selon l'une quelconque des revendications 1 - 5, **caractérisé en ce que** le support de module (1) est mobile de manière coulissante ou verrouillable.

7. Arrangement selon l'une quelconque des revendications 1 - 6, **caractérisé en ce que** le support de module (1) peut comporter jusqu'à 8 modules de distribution (11).

8. Arrangement selon l'une des revendications précédentes, **caractérisé en ce que** les mécanismes de verrouillage (3) pour fixer des modules de distribution (11) sont arrangés au verso par le support de module (1) .

9. Arrangement selon l'une quelconque des revendications précédentes, **caractérisé en ce que** le support de module (1), à la configuration complète avec 8 modules de distribution (11), a jusqu'à 96 connexions LC DUPLEX avec totalement 192 fibres.

10. Arrangement selon l'une quelconque des revendications précédentes, **caractérisé en ce que** le support de module (1), à la configuration complète avec 8 modules des distribution (11), a totalement jusqu'à 96 connexions MPO 24F avec totalement 2.304 fibres.

11. Arrangement selon l'une quelconque des revendications précédentes, **caractérisé en ce que** le support de module (1) a une couverture frontale (5) que faut être seulement accroché, pour la protection des connexions arrangées en derrière.

12. Arrangement selon l'une quelconque des revendications précédente, **caractérisé en ce que** le support de module (1) a une couverture frontale (5), que au même temps est utilisée pour l'acheminement horizontal des câbles patch.

13. Arrangement selon l'une des revendications précédentes , **caractérisé en ce que** le support de module (1) a une couverture frontale (5), que en même temps peut contenir une bande d'inscription.

14. Arrangement selon l'une quelconque des revendications 11 - 13, **caractérisé en ce que** la couverture frontale (5), quand le tiroir est inséré et verrouillé, est verrouillée aussi et ne peut pas être décrochée.
